# EUROPEAN PATENT APPLICATION

(11) **EP 2 784 101 A1**
(43) Date of publication of application: **01.10.2014**
(21) Application number: 13001607.4
(22) Date of filing: 28.03.2013
(51) Int. Cl.: C08G 69/44, C08G 69/48, C09J 177/12

(54) **Hydroxyphenyl functionalized poly(ester amide)**

(71) Applicant: NITTO EUROPE N.V, 3600 Genk (BE); NITTO DENKO CORPORATION, Osaka 567 (JP)
(72) Inventor: Manolakis, Ioannis, 5611 VS Eindhoven (NL); Noordover, Bart Adrianus Johannes, 5643 SB Eindhoven (NL); Vendamme, Richard, 3500 Hasselt (BE); Eevers, Walter Eevers, 3600 Genk (BE)
(74) Representative: Grünecker, Kinkeldey, Stockmair & Schwanhäusser

(57) **Abstract**

The present invention relates to a hydroxyphenyl functionalized poly(ester amide), in particular a L-DOPA-based poly(ester amide), and to its use as an adhesive.

## Description

The present invention relates to a hydroxyphenyl functionalized poly(ester amide) and to its use as an adhesive.

### Background

There is a growing interest in bio-based polymeric materials for various applications, such as adhesive applications, over the recent years.

Biobased poly(ester amide)s and their potential use for biomedical applications such as surgical devices, polymeric depots or for microencapsulation of drugs is described in Macromol. Chem. Phys. 1994, 195, 2279. The poly(ester amide)s are based on bis(L-phenylalanine) α,ω-alkylene diesters and adipic acid. α-Aminoacid-based poly(ester amide)s (PEAs) can be prepared by reacting di-*p*-toluenesulfonic acid salts of bis(α-aminoacid)-α,ω-alkylene diesters with *p*-dinitrophenyl esters of various aliphatic dicarboxylic acids (Macromol. Chem. Phys. 1994, 195, 2279 and J. Polym. Sci., Part A: Polym. Chem. 1999, 37, 391). PEAs were used for implantable medical devices (WO-A-2008/005438), ocular delivery polymer compositions (WO-A-2012/150255), coatings (WO-A-2011/045443), or to further study the properties, in particular the biodegradability, of PEAs (J. Biomater.Sci. Polym. Ed. 2004, 15, 1; J. Mater.Sci. Mat. Med. 2004, 15, 185 and J. Polym. Sci., Part A: Polym. Chem. 2005, 43, 1463).

The incorporation of *L*-3,4-dihydroxyphenylalanine (*L*-DOPA) residues in polymers for adhesive applications in a mussel-like biomimetic approach is described in WO-A-2009/062146, WO-A-2008/019352 and in Science 2007, 318, 426. However, the preparation of polymers in WO-A-2008/019352 requires multistep reactions and the use of protecting groups, and would not allow the tailoring of properties of the polymer.

The problem underlying the present invention is to provide an adhesive which can be prepared from bio-based polymeric materials, and/or which allows an easy tailoring of polymer structure and/or properties as well as processes for its preparation.

### Summary of the invention

The present invention accordingly provides the subject matter as defined in the claims. Preferred embodiments are also disclosed in the following specification. In particular, the present invention provides materials on the basis of oligomeric or polymeric ester amide structures, wherein within the backbone of the material, a group is present corresponding to the group D₁ as defined herein. The polymer may be a polymer comprising only one type of repeating units as defined herein, or the polymer may be a copolymer comprising different types of repeating units. The material as provided by the present invention is, in particular, suitable as adhesive.

Said problem is solved, in particular, by a polymer comprising repeating units according to the following formula (I) 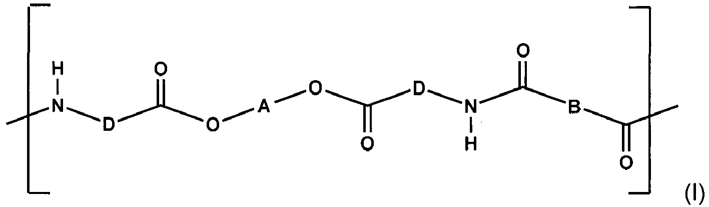 wherein

A is an alkylen group containing from 1 to 50 carbon atoms, an alkenylen or an alkynylen group containing from 2 to 50 carbon atoms, wherein the alkylen, alkenylen or alkynylen group can be substituted, independently of each other, by a carboxylic acid or an alkoxy group having from 1 to 6 carbon atoms,
or a group 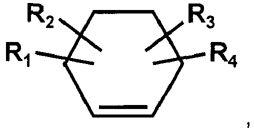 wherein
R₁ is an alkyl or alkenyl group having from 2 to 20 carbon atoms;
R₂ is an alkyl or alkenyl group having from 2 to 20 carbon atoms;
R₃ is an alkylen or alkenylen group having from 2 to 20 carbon atoms; and
R₄ is an alkylen or alkenylen group having from 2 to 20 carbon atoms
or a polyalkylenoxide group having a molecular weight of from 150 to 15,000 Da,
B is an alkylen group containing from 1 to 50, an alkenylen or an alkynylen group containing from 2 to 50 carbon atoms,
D is a group D₁ or D₂, wherein D₁ is an alkylen group containing from 1 to 6 carbon atoms, an alkenylen or an alkynylen group containing from 2 to 6 carbon atoms, wherein said alkylen, alkenylen or alkynylen group is substituted, independently of each other, by a group (F) 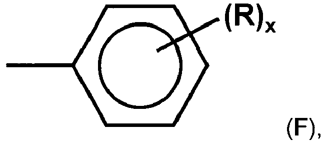 wherein R is a group selected from hydroxy, acetoxy and alkoxy containing from 1 to 6 carbon atoms, provided that at least one R is hydroxy,
x is from 1 to 3,
wherein D₂ is a derivative of an α-amino acid, and
wherein the group D is not only selected from group D₂.

In formula (I), the group D is selected among group D₁ and D₂, with the provision that within the material, at least one group D corresponding to a group selected from the definition of D₁ is present. Preferably, the content of D₁ is 1% or more, based on all groups D, more preferably 5% or more, with suitable upper contents being 100% or less, preferably 99% or less, in particular, 95% or less. Further suitable and preferred ranges are provided in the following specification.

### Definitions

The term "alkyl" as used herein means a monovalent saturated alkyl chain having the indicated number of carbon atoms, which may be straight chained or branched. Examples thereof include methyl, ethyl, propyl, isopropyl, n-butyl, isobutyl, tert-butyl, n-pentyl, isopentyl, neopentyl, hexyl, heptyl, octyl, nonyl, decyl, undecyl and dodecyl.

The term "alkylen" as used herein means a divalent saturated alkyl chain having the indicated number of carbon atoms, which may be straight chained or branched. Examples thereof include methylen, ethylen, propylen, isopropylen, n-butylen, isobutylen, tert-butylen, n-pentylen, isopentylen, neopentylen, hexylen, heptylen, octylen, nonylen, decylen, undecylen and dodecylen.

The term "alkenyl" as used herein means a monovalent alkyl chain having the indicated number of carbon atoms, which may be straight chained or branched, containing at least one carbon to carbon double bond. Examples thereof include ethenyl, propenyl, dodecenyl, 2-methylenehexyl and (2*E*,4*E*)-hexa-2,4-dienyl.

The term "alkenylen" as used herein means an divalent alkyl chain having the indicated number of carbon atoms, which may be straight chained or branched, containing at least one carbon to carbon double bond. Examples thereof include ethenylen, propenylen, dodecenylen, 2-methylenehexylen and (2*E*,4*E*)-hexa-2,4-dienylen.

The term "alkynyl" as used herein means a monovalent alkyl chain having the indicated number of carbon atoms, which may be straight chained or branched, containing at least one carbon to carbon triple bond. Examples thereof include ethynyl, propynyl and dodecynyl.

The term "alkynylen" as used herein means a divalent alkyl chain having the indicated number of carbon atoms, which may be straight chained or branched, containing at least one carbon to carbon triple bond. Examples thereof include ethynylen, propynylen and dodecynylen.

The term "derivative of an α-amino acid" as used herein designates the -C(R)- part of an α-amino acid H₂N-C(R)-COOH.

The term "dimer of a fatty alcohol" as used herein refers to the dimerisation product of mono- or polyunsaturated fatty alcohols. The fatty alcohols preferably contain from 14 to 22 carbon atoms, i.e. 14, 15, 16, 17, 18, 19, 20, 21 or 22 carbon atoms.

The term "derivative of a dimer of a fatty alcohol" designates a dimer of a fatty alcohol without the terminal OH-groups.

### Definition of group A

In a preferred embodiment in combination with any of the above or below embodiments, group A in formula (I) is an alkylen, alkenylen or alkynylen group containing from 2 to 40 carbon atoms, more preferably from 2 to 30 carbon atoms, even more preferably from 2 to 20 carbon atoms, even more preferably from 2 to 15 carbon atoms, in particular from 2 to 10 carbon atoms.

In another preferred embodiment in combination with any of the above or below embodiments, group A in formula (I) is an alkylen group containing from 5 to 7 carbon atoms, in particular 6 carbon atoms.

In another preferred embodiment in combination with any of the above or below embodiments, group A in formula (I) is an alkylen, alkenylen or alkynylen group which is subsituted by a carboxylic acid or an alkoxy group having from 1 to 4 carbon atoms, in particular methoxy or ethoxy.

In another preferred embodiment in combination with any of the above or below embodiments, group A in formula (I) is selected from the group consisting of 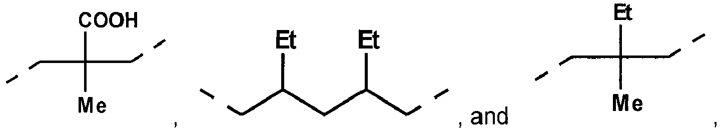 wherein the symbol indicates a bond.

In another preferred embodiment in combination with any of the above or below embodiments, the polyalkylene oxide in group A of fomula (I) has a molecular weight of from 400 to 3,500 Da.

In another preferred embodiment in combination with any of the above or below embodiments, the polyalkylene oxide in group A of fomula (I) is an ethylene oxide or propylene oxide, in particular diethylene glycol or triethylene glycol. In another preferred embodiment, the polyalkylene oxide is an ethyleneoxide with a molecular weight of from 400 to 3,500 Da.

In another preferred embodiment in combination with any of the above or below embodiments, group A is a group 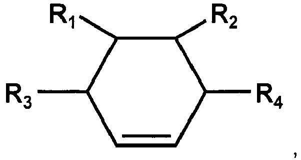 wherein R₁ to R₄ are as defined above. More preferably, group A is a derivative of a dimer of a fatty alcohol, in particular a derivative of Pripol 2033. Pripol 2033 is shown in Figure 1 of Biomacromolecules 2012, 13, 1933-1944.

In another preferred embodiment in combination with any of the above or below embodiments, the dimer of a fatty alcohol is obtainable by hydrogenation of a dimer of oleic acid, linoleic acid, palmitoleic acid, linolenic acid, eleostearic acid, ricinoleic acid, vernolic acid, licanic acid, myristoleic acid, margaroleic acid, gadoleic acid, eicosadienoic acid and/or erucic acid.

Dimers of a fatty alcohol are commercially available for example from Croda (trade name PRIPOL 2033) or Cognis (SOVERMOL 908).

The polymer of formula (I) can contain different groups A.

### Definition of group B

In another preferred embodiment in combination with any of the above or below embodiments, group B in formula (I) is an alkylen, alkenylen or alkynylen group containing from 2 to 36 carbon atoms, more preferably from 3 to 16 carbon atoms, even more preferably 5 to 12 carbon atoms.

In another preferred embodiment in combination with any of the above or below embodiments, group B in formula (I) is an alkylen group having from 7 to 9 carbon atoms, in particular 8 carbon atoms.

The polymer of formula (I) can contain different groups B.

### Definition of group D

In another preferred embodiment in combination with any of the above or below embodiments, group D₁ in formula (I) is an alkylen group containing from 1 to 6 carbon atoms, more preferably 1 to 4 carbon atoms, even more preferably 1 to 3 carbon atoms, in particular 2 carbon atoms, wherein said alkylen group is substituted, independently of each other, by a group (F).

In another preferred embodiment in combination with any of the above or below embodiments, group D₁ in formula (I) is an alkenylen or an alkynylen group containing from 2 to 6 carbon atoms, more preferably 2 to 4 carbon atoms, even more preferably 2 or 3 carbon atoms, in particular 2 carbon atoms wherein said alkylen, alkenylen or alkynylen group is substituted, independently of each other, by a group (F).

In another preferred embodiment in combination with any of the above or below embodiments, group R is a hydroxy, an acetoxy, a methoxy or an ethoxy group, and x is 1 or 2, in particular 2, in group (F).

In another preferred embodiment in combination with any of the above or below embodiments, group R is a hydroxy group and x is 1 or 2, in particular 2, in group (F).

In another preferred embodiment in combination with any of the above or below embodiments, group D₁ in formula (I) is a group 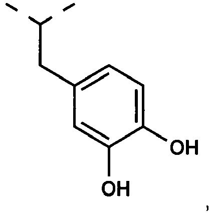 more preferably a derivative of DOPA, i.e. the *L-, D-* or *DL*-form of DOPA, in particular a derivative of *L*-DOPA.

In another preferred embodiment in combination with any of the above or below embodiments, group D₂ is a derivative of an α-amino acid wherein the α-amino acid is selected from the group consisting of phenylalanine, lysine, histidine, serine, threonine, methionine, glycine, proline, alanine, valine, leucine, isoleucine, tyrosine and tryptophan, more preferably selected from group consisting of phenylalanine, lysine, histidine, serine, threonine, methionine, tyrosine and tryptophan, in particular phenylalanine.

In another preferred embodiment in combination with any of the above or below embodiments, the content of D₁ is up to 50%, preferably from 5 to 30%, more preferably from 10 to 20% based on all groups D.

In another preferred embodiment in combination with any of the above or below embodiments, the content of D₂ is at least 50%, more preferably from 70 to 95%, in particular from 80 to 90% based on all groups D.

The polymer of formula (I) can contain different groups D₁ and different groups D₂.

### Preferred polymers

In another preferred embodiment in combination with any of the above or below embodiments, the present invention provides a polymer of formula (I), wherein
group A is an alkylen, alkenylen or alkynylen group containing from 2 to 20 carbon atoms, more preferably from 2 to 15 carbon atoms, in particular from 2 to 10 carbon atoms, or a derivative of a dimer of a fatty alcohol,
group B is an alkylen, alkenylen or alkynylen group containing from 3 to 16, more preferably 5 to 12 carbon atoms, in particular an alkylen group containing from 7 to 9 carbon atoms,
group D₁ is an alkylen group containing from 1 to 3 carbon atoms, more preferably 2 carbon atoms, wherein said alkylen group is substituted, independently of each other, by a group (F), wherein R is a hydroxy group and x is 1 or 2, in particular 2, and
group D₂ is a derivative of an α-amino acid wherein the α-amino acid is selected from the group consisting of phenylalanine, lysine, histidine, serine, threonine, methionine, glycine, proline, alanine, valine, leucine, isoleucine, tyrosine and tryptophan, in particular phenylalanine.

In another preferred embodiment in combination with any of the above or below embodiments, the present invention provides a polymer of formula (I), wherein
group A is an alkylen, alkenylen or alkynylen group containing from 2 to 15 carbon atoms, in particular from 2 to 10 carbon atoms, or a derivative of a dimer of a fatty alcohol,
group B is an alkylen, alkenylen or alkynylen group containing from 5 to 12 carbon atoms, in particular an alkylen group containing from 7 to 9 carbon atoms,
group D₁ is an alkylen group containing from 1 to 3 carbon atoms, more preferably 2 carbon atoms, wherein said alkylen group is substituted, independently of each other, by a group (F), wherein R is a hydroxy group and x is 2, and
group D₂ is a derivative of an α-amino acid wherein the α-amino acid is selected from the group consisting of phenylalanine, lysine, histidine, serine, threonine, methionine, glycine, proline, alanine, valine, leucine, isoleucine, tyrosine and tryptophan, in particular phenylalanine.

In another preferred embodiment in combination with any of the above or below embodiments, the polymer has the following formula (II) 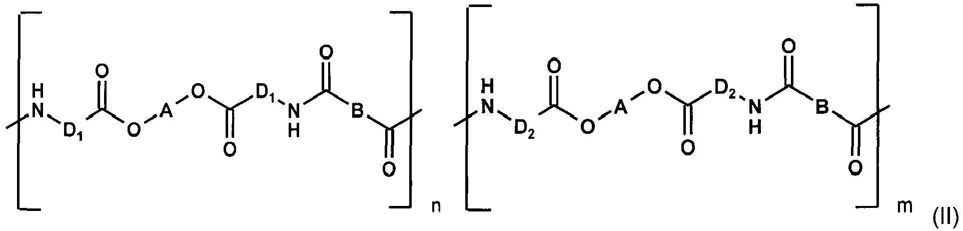 wherein n is from 0.05 to 1 and m is from 0 to 0.95 and wherein A, B, D₁ and D₂ are as defined above. All preferred embodiments for the polymer of formula (I) are equally applicable for the polymer of formula (II).

The presence of moieties corresponding to group D₁ can be detected by conventional techniques, such as spectroscopical evaluation, including IR and NMR. The quantification of the content of the moiety corresponding to group D₁ in a material already synthesized can be done by NMR techniques. For example, if D₁ is *L*-DOPA and D₂ is *L*-phenylalanin, the area under the characteristic signals for the aromatic hydrogens of L-DOPA and L-phenylalanin can be integrated and their ratio be calculated in order to determine the percentages of D₁ and D₂. Alternatively, other signals can used for this calculation, such as the protons a and a' in the polymer of Example 8. The calculated values are in good agreement with the nominal values.

### Polymer properties

The polymer of formula (I) is amorphous depending, amongst others, upon the specific choice of group D. For example, the polymer is amorphous if group D is exclusively or almost exclusively DOPA.

The polymer of formula (I) has preferably a number average molecular weight of from 2.0 to 50.0 kDa, more preferably from 3.0 to 40.0 kDa, in particular of from 10.0 to 30.0 kDa. The molecular weight can be determined by size-exclusion chromatography in DMAc/LiCl. Size exclusion chromatography (SEC) was performed on a Waters Alliance system equipped with a Waters 2695 separation module, a Viscotek dual detector model 250 refractive index detector (40 °C), a Waters 2487 dual absorbance detector, a PSS GRAM guard column followed by 2 PSS GRAM columns in series of 100 A (10 mm particles) and 3000 A (10 mm particles) respectively at 60°C. Dimethylacetamide (DMAc, Aldrich) with lithium chloride (2.1 g/L) was used as eluent at a flow rate of 1 mL min-1. The molecular weights were calculated against polystyrene standards (Polymer Laboratories, Mₚ = 580 Da up to Mₚ = 7.1*106 Da).

The polydispersity index (PDI) is the ratio of M_{w} over Mₙ. The polymer of formula (I) has preferably a PDI of from 1.3 to 8.0.

The polymer of formula (I) has preferably a glass transition temperature T_{g} of from -30 to 70°C. The glass transition temperature T_{g} was determined by DSC analysis of the polymers using a DSC Q100 from TA-instruments. The measurement was carried out from -70 °C to 150 °C with a heating and cooling rate of 10 °C/min under a nitrogen flow of 50 mL/min. The T_{g} was obtained from the inflection point in the curve recorded during the second heating run.

Due to the fact that the moiety corresponding to D₁ is present in the materials in accordance with the present invention in the backbone structure, and is not, as done in the prior art, introduced by means of side chain modifications, such as branching and/or grafting, it is possible to better tailor the desired chemical composition of the materials and thereby also to tailor the properties of the materials in accordance with the present invention. Typically, a higher content of moieties D₁ increases the adhesiveness of the materials. Introducing moieties D₁ and appropriately selecting groups A and B allows, on the other hand, to tailor/adjust other properties, such as by introducing additional chemical functionalities, or to adjust physical properties, such as the glass transition temperature etc. For example, the water solubility of the polymer can be improved if group A contains polyethylene oxide (PEG) or a substitution by - COOH.

### Method and use

The present invention is also directed to a process for preparing the polymer of formula (I), comprising the following reaction: 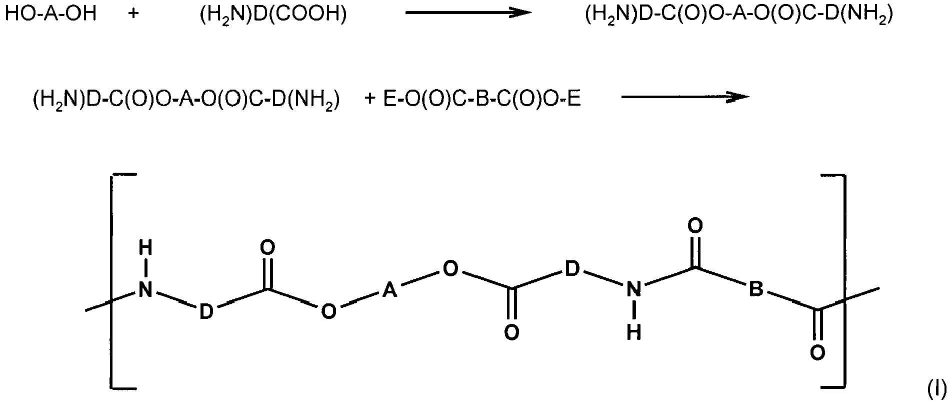 wherein A, B and D are as defined above and wherein E is a leaving group.

In a preferred embodiment in combination with any of the above or below embodiments, the process for preparing the polymer of formula (II) comprises the following reaction: 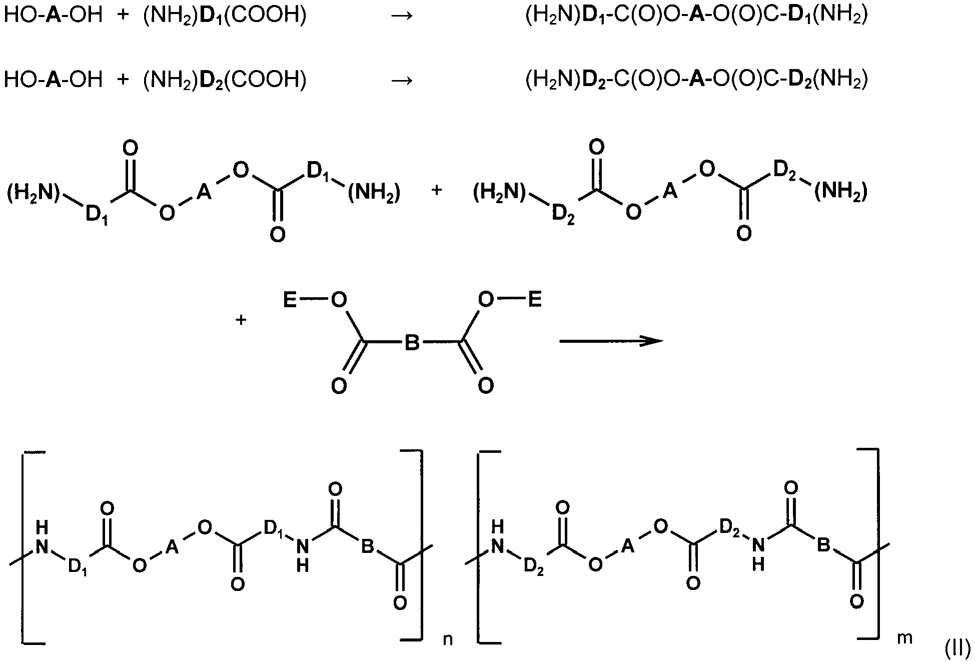 wherein A, B, D₁ and D₂ are as defined above, wherein n is from 0.05 to 1 and m is from 0 to 0.95, and wherein E is a leaving group.

In a preferred embodiment in combination with any of the above or below embodiments, the leaving group E is p-nitrophenyl.

The present invention is also directed to the use of the polymer of formula (I) as an adhesive. The polymer of formula (I) is then an adhesive. In another preferred embodiment in combination with any of the above or below embodiments, the polymer of formula (I) is used as a pressure-sensitive adhesive. The polymer of formula (I) is then a pressure-sensitive adhesive.

The monomer of the A category (i.e. (H₂N)**D₁**-C(O)O-**A**-O(O)C-**D₁**(NH₂) or (H₂N)**D₂**-C(O)O-**A**-O(O)C-**D₂**(NH₂)) can be prepared as described in J. Polym. Sci., Part A: Polym. Chem. 1999, 37, 391 or J. Polym. Sci., Part A: Polym. Chem. 2005, 43, 1463. Thus, the diols can be reacted with α-amino acids in toluene, in the presence of p-toluenesulfonic acid (p-TosOH). The monomer of the A category will then be present in the form of the corresponding diester p-TosOH/amino acid salt.

The monomer of the B category (i.e. E-O(O)C-B-C(O)O-E) can be prepared as described in J. Polym. Sci., Part A: Polym. Chem. 1999, 37, 391. Thus, the corresponding acid dichlorides can be reacted with p-nitro-phenol in the presence of pyridine.

The monomer of the A category in the form of its diester p-TosOH/amino acid salt can be reacted with the monomer of the B category.

The synthesis of polymers of formula (I) will be shown in the following for exemplary polymers.

The following Scheme 1 shows the synthesis of *L*-DOPA-functionalized diester monomers using diols as precursors.

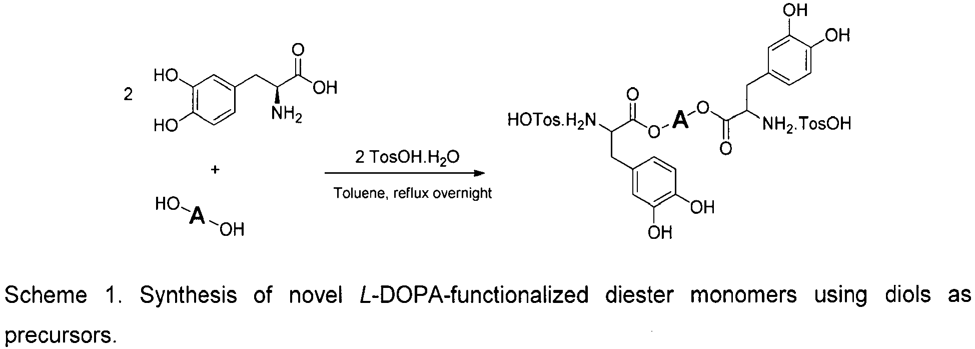

The following Scheme 2 shows the synthesis of *L*-DOPA-based poly(ester amide)s in triethylamine and N,N-dimethylacetamide at a temperature of 70-85°C for 16 to 48 h.

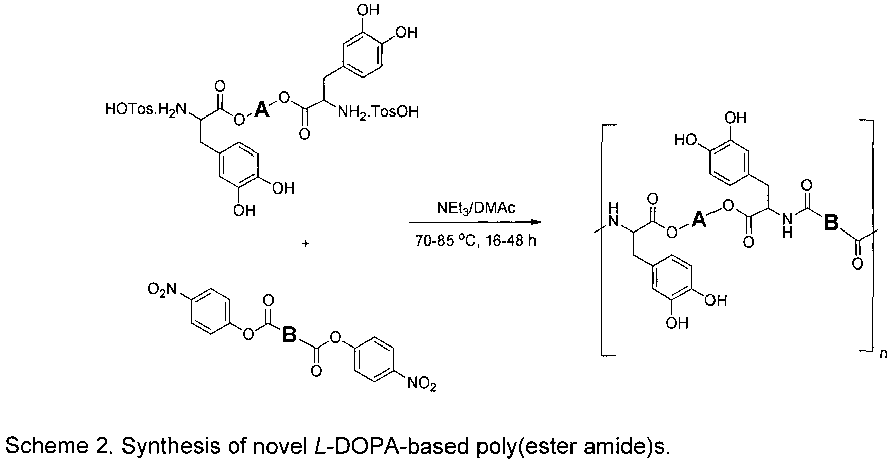

The reaction of Scheme 2 is illustrated in Scheme 3 for starting materials where A is a C₆-alkylene group and B is a C₈-alkylene group.

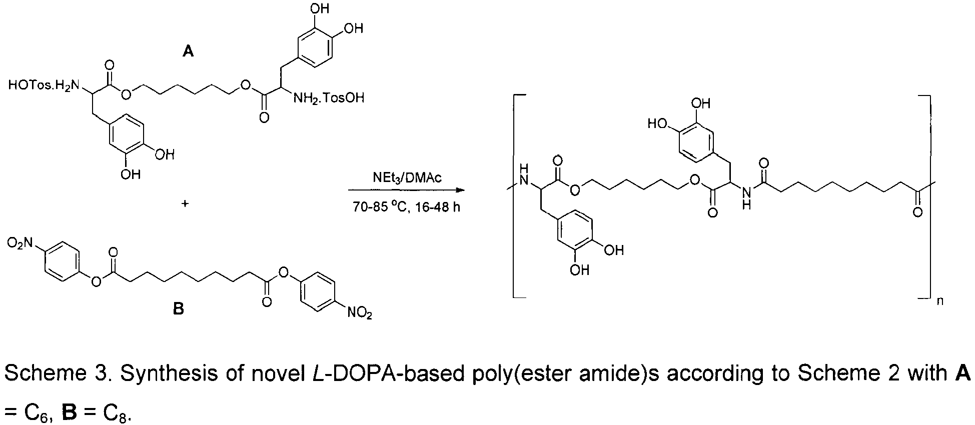

This method can be used for a broad range of diol species such as a dimer of a fatty alcohol. This is shown below for PRIPOL 2033. Monomers and polymers were synthesized in a completely analogous manner (Schemes 4 and 5, respectively), following the generic scheme 1 (for monomer synthesis) and scheme 2 (for polymer synthesis).

Scheme 4 shows the synthesis of a *L*-DOPA-functionalized diester monomer using the dimer of a fatty alcohol PRIPOL 2033 as a precursor.

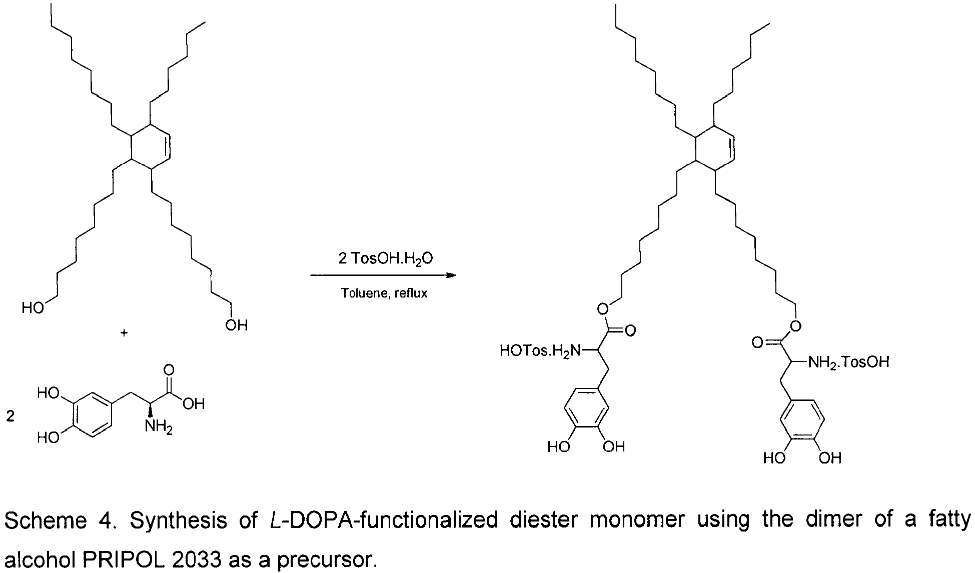

The following Scheme 5 shows the synthesis of a *L*-DOPA-based poly(ester amide) according to Scheme 2, wherein **A** is the the dimer of a fatty alcohol PRIPOL 2033 and **B** is a C₈-alkylene.

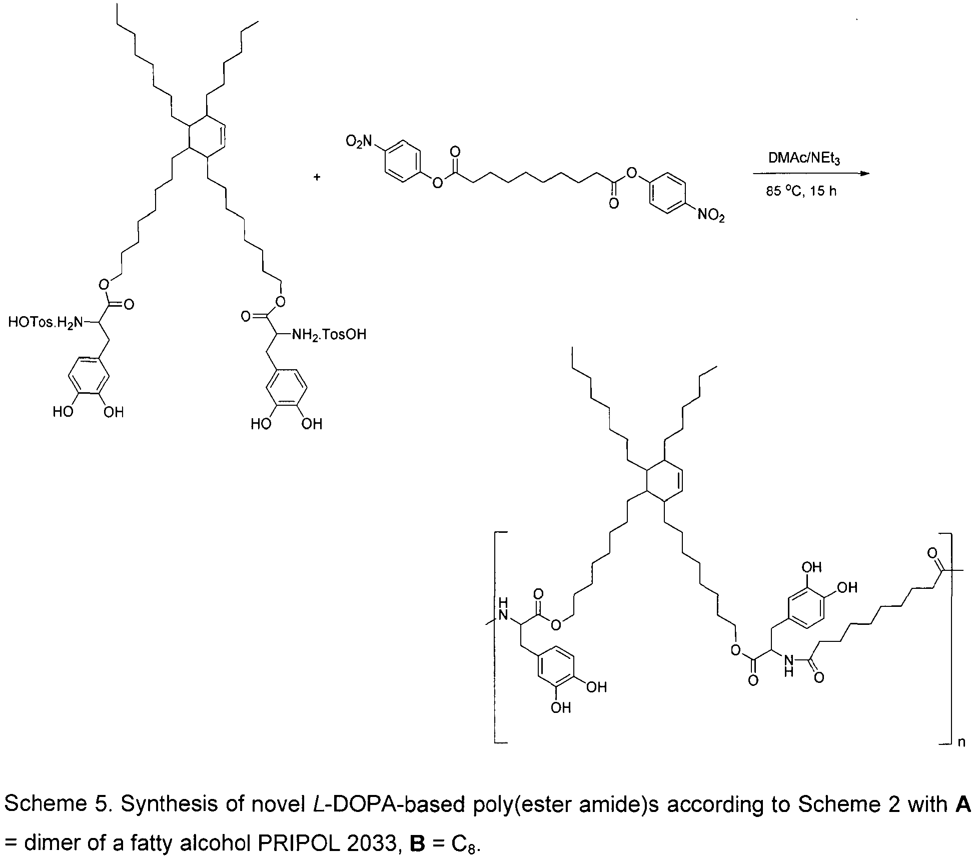

The following examples illustrate the invention.

### Examples

### Example 1: Synthesis of bis-(4-nitro-phenyl) sebacate

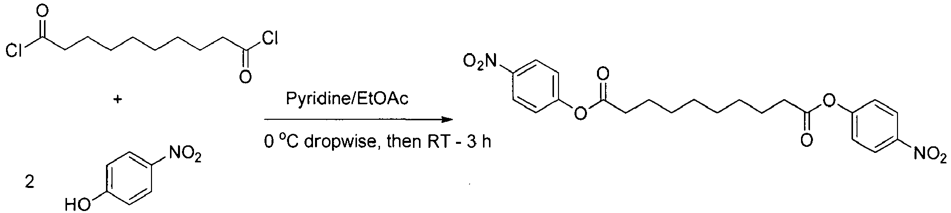

A solution of sebacoyl chloride (2.39 g, 10 mmol) in ethyl acetate (10 mL) is added dropwise to a stirring solution of 4-nitro-phenol (2.80 g, 20.1 mmol) and pyridine (1.59 g, 20.1 mmol) in ethyl acetate (20 mL) at 0°C. The reaction is allowed to heat up to room temperature and is continued for another 3 h. The resulting white precipitate is filtered off, washed with water, filtered off, washed with ethyl acetate, filtered off and dried at 70°C in vacuum oven overnight. The yield is 39%. 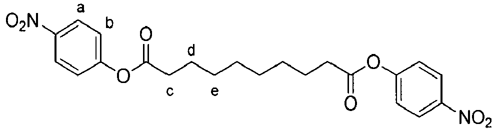 IR (neat-ATR cell, cm⁻¹): 2933, 1740, 1616, 1521, 1449, 1345, 1285, 1197, 1155, 1008, 815; ¹H-NMR (400 MHz, CDCl₃): 8.29-8.25 (AA'XX', 4H, a), 7.29-7.25 (AA'XX', 4H, b), 2.63-2.59 (t, 4H, c), 1.81-1.74 (m, 4H, d), 1.48-1.37 (m, 8H, e).

### Example 2: Synthesis of di-p-toluenesulfonic acid salt of bis(L-DOPA)-1,6-hexylene diester

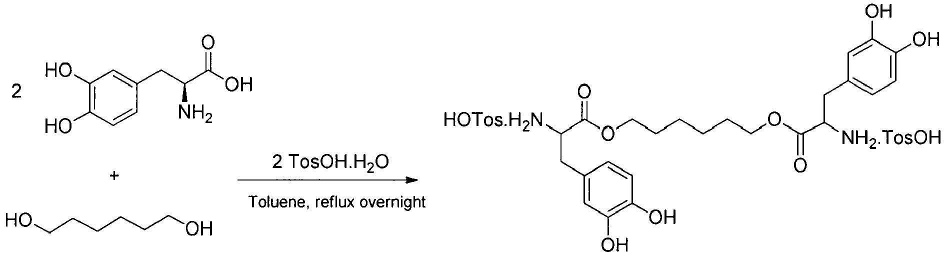

A suspension of L-DOPA (8.28 g, 42 mmol), 1,6-hexanediol (2.36 g, 20 mmol) and p-toluenesulfonic acid monohydrate (7.99 g, 42 mmol) in toluene (200 mL) is refluxed under a N₂ atmosphere overnight, using also a Dean-Stark trap to azeotropically remove water. After cooling to room temperature, the solid residue is filtered and dried at 120°C under vacuum overnight. The crude yield is 97%. The product can be further purified by dissolving in a hot chloroform/methanol 5/1 v/v mixture and re-precipitated by adding diethyl ether. 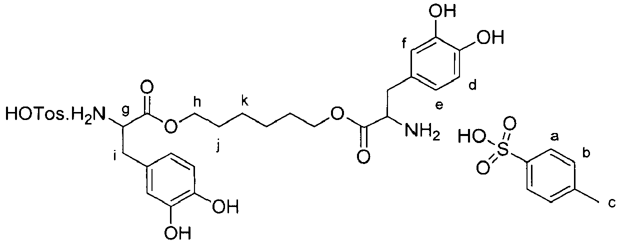 IR (neat-ATR cell, cm⁻¹): 3140, 2932, 1734, 1604, 1519, 1448, 1368, 1286, 1150, 1118, 1032, 1007, 813; ¹H-NMR (400 MHz, DMSO-d₆): 8.87-8.83 (br, 4H, amine), 8.25 (br, 4H, hydroxyl), 7.48-7.46 (AA'XX', 4H, a), 7.11-7.09 (AA'XX', 4H, b), 6.66-6.64 (d, 2H, d), 6.56 (d, 2H, f), 6.43-6.41 (dd, 2H, e), 4.15-4.12 (t, 2H, g), 4.05-4.02 (t, 4H, h), 2.96-2.84 (m, 4H, i), 2.27 (s, 6H, c), 1.48-1.45 (m, 4H, j), 1.17-1.15 (m, 4H, h); T_{g} = 44°C (onset).

### Example 3: Synthesis of a di-p-toluenesulfonic acid salt of bis(L-DOPA)-α,ω-alkylene diester using the dimer of a fatty alcohol PRIPOL 2033

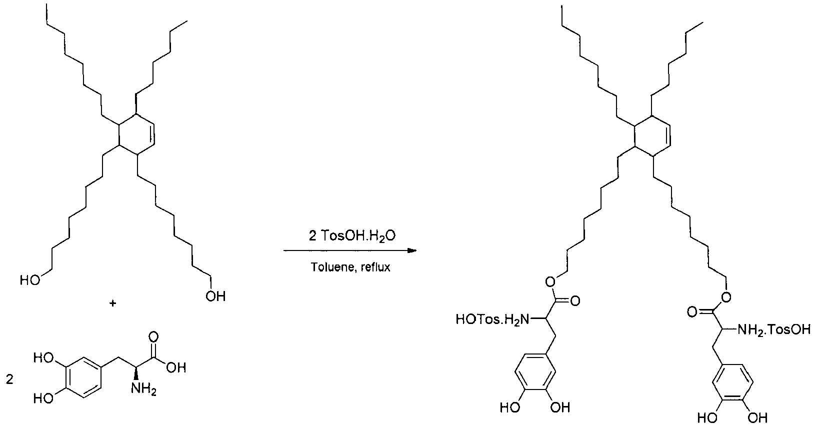

A suspension of L-DOPA (12.42 g, 63 mmol), PRIPOL 2033 (16.15 g, 30 mmol) and p-toluenesulfonic acid monohydrate (11.98 g, 63 mmol) in toluene (200 mL) is refluxed under a N₂ atmosphere overnight, using also a Dean-Stark trap to azeotropically remove water. After cooling to room temperature, the solid residue is filtered and dried at 120°C under vacuum overnight. The crude yield is 87%. 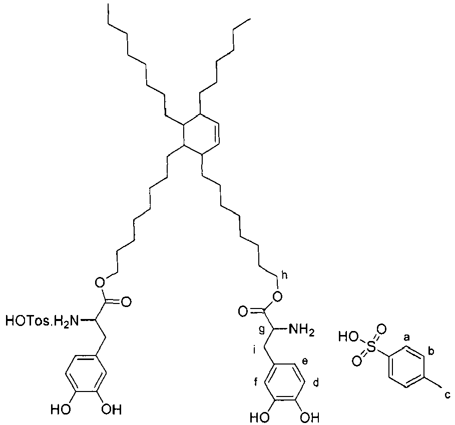 ¹H-NMR (400 MHz, DMSO-d₆): 8.86-8.82 (m, 4H, amine), 8.20 (br, 4H, hydroxyl), 7.47-7.45 (AA'XX', 4H, a), 7.10-7.08 (AA'XX', 4H, b), 6.66-6.64 (d, 2H, d), 6.55 (d, 2H, f), 6.42-6.40 (dd, 2H, e), 4.16-4.12 (t, 2H, g), 4.07-4.02 (t, 4H, h), 2.93-2.83 (m, 4H, i), 2.27 (s, 6H, c), 1.49-1.47 (m, Pripol -CH-), 1.21-1.14 (m, Pripol -CH₂-), 0.84-0.78 (m, Pripol -CH₃).

### Example 4: Synthesis of di-p-toluenesulfonic acid salt of bis(L-phenylalanine)-1,6-hexylene diester

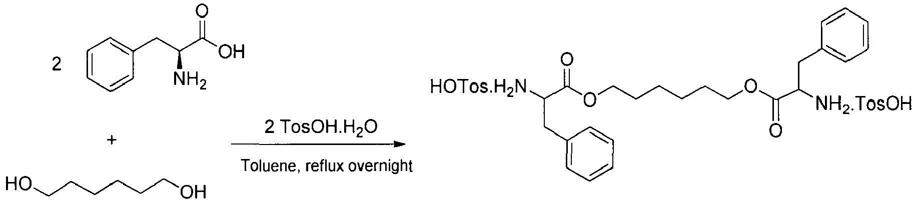

A suspension of L-phenylalanine (6.94 g, 42 mmol), 1,6-hexanediol (2.36 g, 20 mmol) and p-toluenesulfonic acid monohydrate (7.99 g, 42 mmol) in toluene (150 mL) is refluxed under a N₂ atmosphere overnight, using also a Dean-Stark trap to azeotropically remove water. After cooling to room temperature, the solid residue is filtered and dried at 120°C under vacuum overnight, and subsequently recrystallized from water. The yield is 74%. 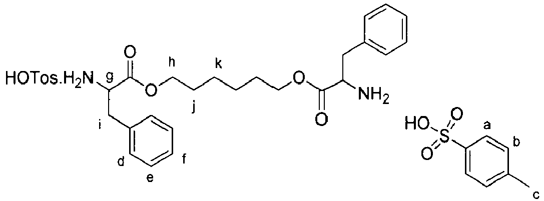 ¹H-NMR (400 MHz, CDCl₃): 8.37 (br, 6H, amine), 7.48-7.45 (AA'XX', 4H, a), 7.31-7.20 (m, 10H, d, e, f), 7.11-7.09 (AA'XX', 4H, b), 4.29-4.25 (t, 2H, g), 4.03-3.97 (t, 4H, h), 3.16-2.97 (m, 4H, i), 2.27 (s, 6H, c), 1.44-1.33 (m, 4H, j), 1.06-1.03 (m, 4H, h); Tₘ = 206°C (DSC).

### Example 5: Synthesis of a di-p-toluenesulfonic acid salt of bis(L-phenylalanine)-α,ω-alkylene diester using the dimer of a fatty alcohol PRIPOL 2033

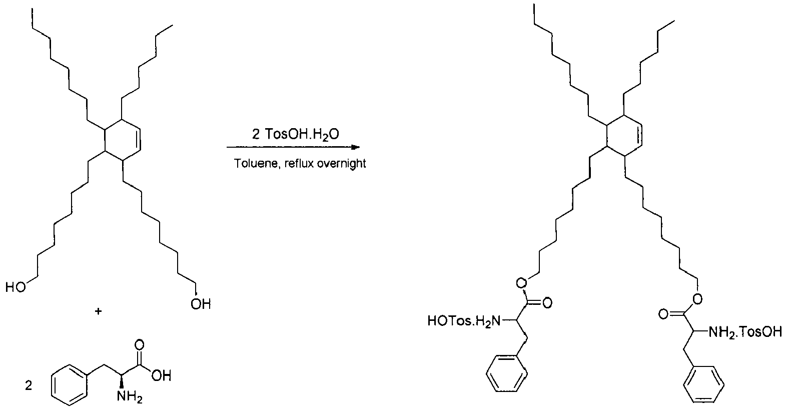

A suspension of L-phenylalanine (5.20 g, 31.5 mmol), PRIPOL 2033 (8.08 g, 15 mmol) and p-toluenesulfonic acid monohydrate (5.99 g, 31.5 mmol) in toluene (100 mL) is refluxed under a N₂ atmosphere overnight, using also a Dean-Stark trap to azeotropically remove water. The reaction progresses homogeneously. After cooling to room temperature, a white solid precipitates and is removed by filtration. The filtrate is a thick yellow liquid, which is subsequently put in the rotary evaporator to remove residual toluene. The yield is 53%. 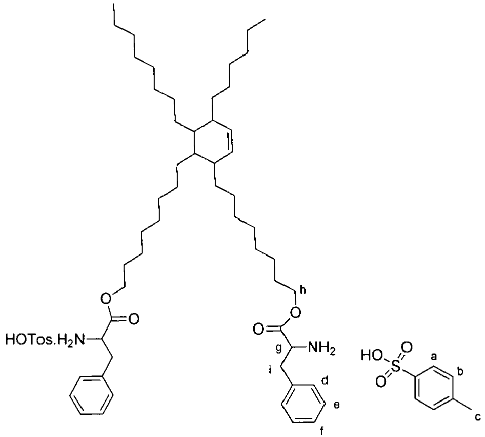 ¹H-NMR (400 MHz, CDCl₃): 8.31 (br, 6H, amine), 7.46-7.45 (AA'XX', 4H, a), 7.32-7.12 (m, 10H, d, e, f), 7.11-7.09 (AA'XX', 4H, b), 4.29-4.25 (t, 2H, g), 4.02-3.99 (t, 4H, h), 3.13-2.96 (m, 4H, i), 2.93-2.83 (m, 4H, i), 2.26 (s, 6H, c), 1.42-1.35 (m, Pripol -CH-), 1.24-1.11 (m, Pripol -CH₂-), 0.84-0.78 (m, Pripol -CH₃).

### Example 6: Synthesis of a homopolymer from di-p-toluenesulfonic acid salt of bis(L-DOPA)-1,6-hexylene diester and bis-(4-nitro-phenyl) sebacate

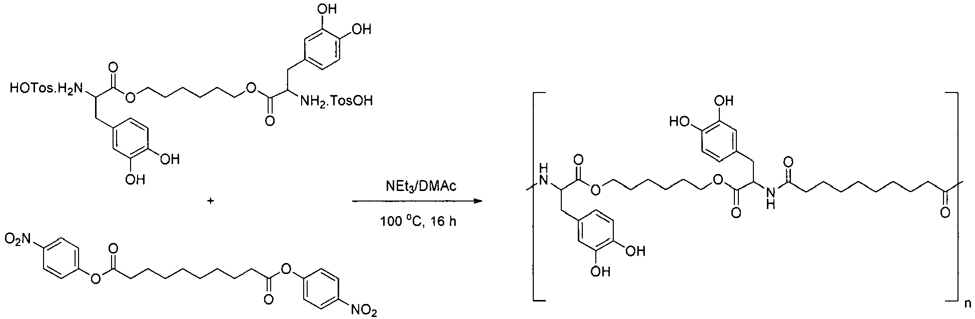

Samples of bis-(4-nitro-phenyl) sebacate (0.444 g, 1.0 mmol) and di-*p*-toluenesulfonic acid salt of bis(L-DOPA)-1,6-hexylene diester (0.821 g, 1.0 mmol) are dissolved in dimethylacetamide (0.9 mL) and stirred under N₂. Then, triethylamine (0.305 mL, 2.2 mmol) is added dropwise with a syringe through a septum and the reaction is continued for a further 16 h at 100°C. The reaction mixture is then poured into water and a sticky brown polymer precipitates. The polymer is washed with acetone twice and then dried at 80 °C overnight in a vacuum oven. The yield is 56%. 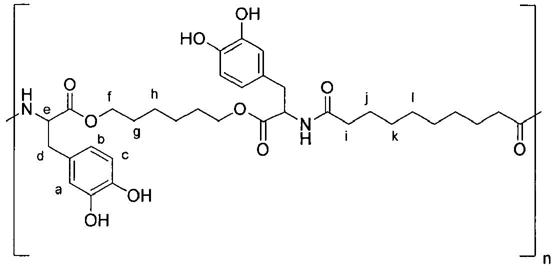 IR (neat-ATR cell, cm⁻¹): 2927, 2855, 1725, 1640, 1515, 1443, 1360, 1279, 1189, 1113, 960; ¹H-NMR (400 MHz, DMSO-d₆): 8.70 (br, 4H, hydroxyl), 8.12-8.10 (d, 2H, -NH), 6.58-6.56 (d, 2H, c), 6.55-6.54 (d, 2H, a), 6.42-6.39 (dd, 2H, b), 4.33-4.27 (m, 2H, e), 3.99-3.91 (m, 4H, f), 2.79-2.62 (m, 4H, d), 2.05-2.01 (t, 4H, i), 1.45-1.37 (m, 8H, j, g), 1.22-1.09 (m, 12H, h, k, l); T_{g} = 53°C (onset); Mₙ (RI, DMAc/LiCl) = 13.6 kDA, M_{w} (RI, DMAc/LiCl) = 27.8 kDA, PDI = 2.0.

### Example 7: Synthesis of a homopolymer from di-p-toluenesulfonic acid salt of bis(L-phenylalanine)- α,ω-alkylene diester from the dimer of a fatty alcohol PRIPOL 2033 and bis-(4-nitro-phenyl) sebacate

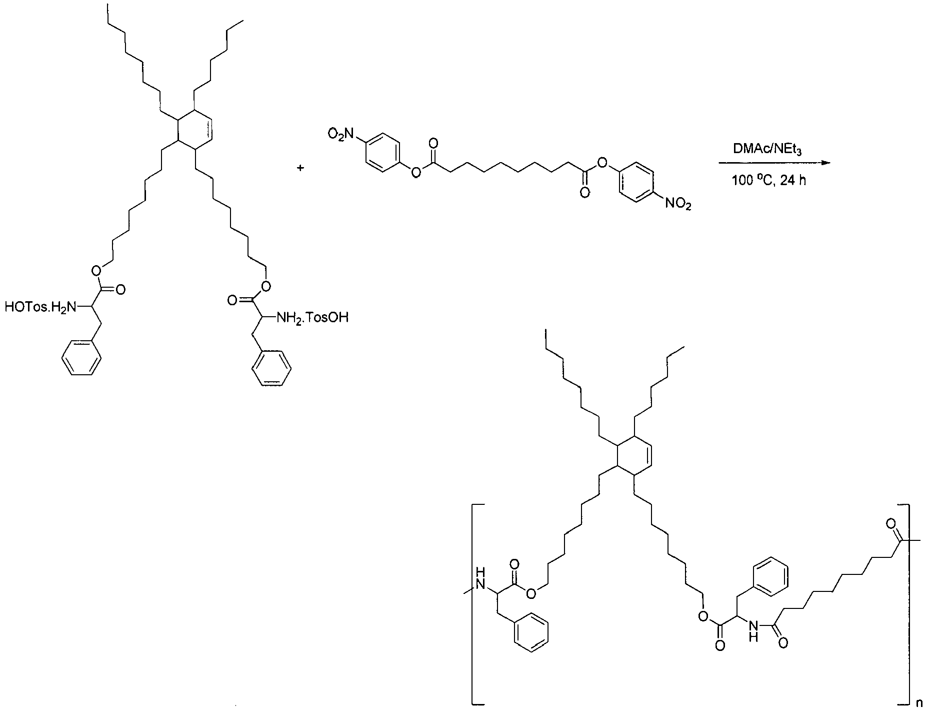

Samples of bis-(4-nitro-phenyl) sebacate (0.444 g, 1.0 mmol) and di-*p*-toluenesulfonic acid salt of bis(L-phenylalanine)-α,ω-alkylene diester from the dimer of a fatty alcohol PRIPOL 2033 (1.174 g, 1.0 mmol) are dissolved in dimethylacetamide (0.9 mL) and stirred under N₂. Then, triethylamine (0.305 mL, 2.2 mmol) is added dropwise with a syringe through a septum and the reaction is continued for a further 24 h at 100°C. The reaction mixture is then poured into water and a sticky brown polymer precipitates. The polymer is dissolved into a minimum amount of ethyl acetate (5 mL) and precipitated again into methanol (25 mL). The sticky polymer is washed further with methanol (10 mL) and is then dried at 80°C overnight in a vacuum oven. The yield is 48%. 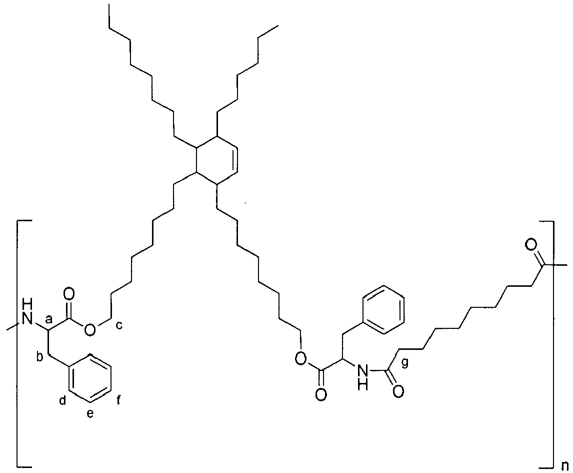 ¹H-NMR (400 MHz, CDCl₃): 7.29-7.08 (m, 10H, d, e, f), 5.92 (br, 2H, -NH), 4.90-4.85 (m, 4H, a), 4.11-4.07 (m, 4H, c), 3.15-3.07 (m, 4H, b), 2.18-2.12 (t, 4H, g), 1.55-1.53 (m, Pripol -CH-), 1.24-1.11 (m, Pripol and linear -CH₂-), 0.84-0.78 (m, Pripol -CH₃); T_{g} = -18°C (onset); Mₙ (RI, DMAc/LiCl) = 5.3 kDA, M_{w} (RI, DMAc/LiCl) = 7.6 kDA, PDI = 1.45.

### Example 8: Synthesis of a co-polymer from di-p-toluenesulfonic acid salt of bis(L-phenylalanine)-α,ω-alkylene diester from the dimer of a fatty alcohol PRIPOL 2033, di-p-toluenesulfonic acid salt of bis(L-DOPA)- α,ω-alkylene diester from the dimer of a fatty alcohol PRIPOL 2033 and bis-(4-nitro-phenyl) sebacate

This example describes the synthesis of the L-Phe/L-DOPA 80/20 co-polymer. Any other co-polymer composition can be synthesized in a similar manner. Characterization data are also given for the 90/10 and 50/50 co-polymers.

Samples of bis-(4-nitro-phenyl) sebacate (0.444 g, 1.0 mmol), di-*p*-toluenesulfonic acid salt of bis(L-phenylalanine)-α,ω-alkylene diester from the dimer of a fatty alcohol PRIPOL 2033 (0.939 g, 0.8 mmol) and di-*p*-toluenesulfonic acid salt of bis(L-DOPA)-α,ω-alkylene diester from the dimer of a fatty alcohol PRIPOL 2033 (0.248 g, 0.2 mmol) are dissolved in dimethylacetamide (0.9 mL) and stirred under N₂. Then, triethylamine (0.305 mL, 2.2 mmol) is added dropwise with a syringe through a septum and the reaction is continued for a further 16 h at 85°C. The reaction mixture is then poured into water and a sticky brown polymer precipitates. The polymer is dissolved into a minimum amount of ethyl acetate (5 mL) and precipitated again into methanol (25 mL). The sticky polymer is washed further with methanol (10 mL) and is then dried at 80°C overnight in a vacuum oven. The yield is 43%. 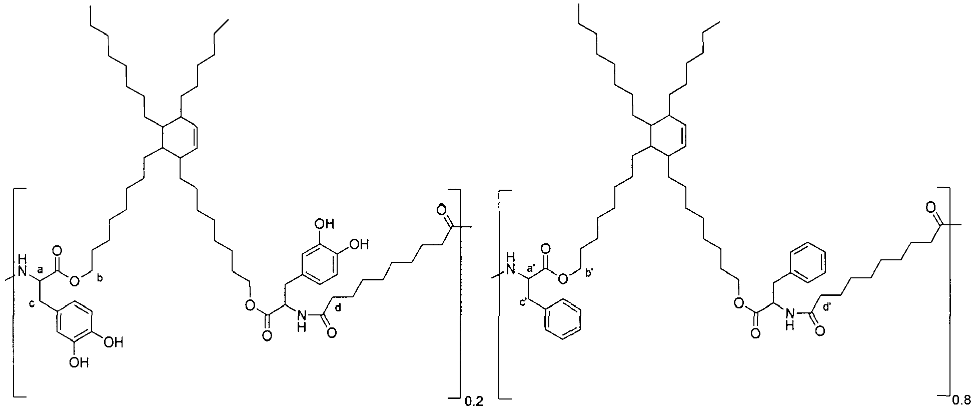 ¹H-NMR (400 MHz, CDCl₃): 7.29-7.08 (m, L-Phe aromatics), 6.74-6.45 (m, L-DOPA aromatics), 5.92 (br, -NH), 4.91-4.81 (m, a, a'), 4.11-4.07 (m, b, b'), 3.13-3.09 (m, c, c'), 2.18-2.14 (m, d, d'), 1.28-1.19 (m, Pripol and linear -CH₂-), 0.89-0.81 (m, Pripol -CH₃); T_{g} = -11°C (onset); Mₙ (RI, DMAc/LiCl) = 7.9 kDA, M_{w} (RI, DMAc/LiCl) = 13.7 kDA, PDI = 1.74.
For the 50/50 co-polymer: T_{g} = -14°C (onset); Mₙ (RI, DMAc/LiCl) = 6.6 kDA, M_{w} (RI, DMAc/LiCl) = 13.4 kDA, PDI = 2.05.
For the 90/10 co-polymer: T_{g} = -12°C (onset); Mₙ (RI, DMAc/LiCl) = 7.7 kDA, M_{w} (RI, DMAc/LiCl) = 13.0 kDA, PDI = 1.69.
All co-polymers showed very similar ¹H-NMR spectra.

## Claims

1. A polymer comprising repeating units according to the following formula (I) 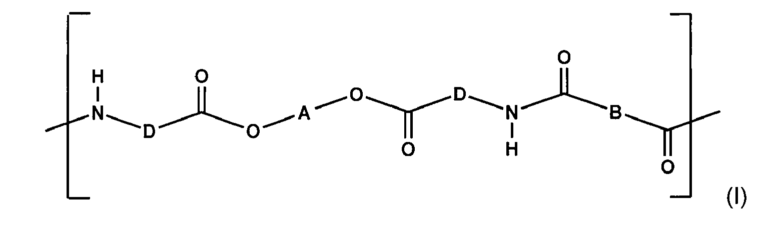 wherein
A is an alkylen group containing from 1 to 50 carbon atoms, an alkenylen or an alkynylen group containing from 2 to 50 carbon atoms, wherein the alkylen, alkenylen or alkynylen group can be substituted, independently of each other, by a carboxylic acid or an alkoxy group having from 1 to 6 carbon atoms,
or a group 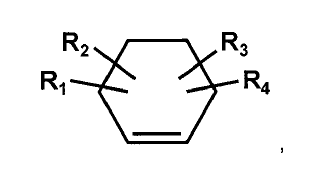 wherein
R₁ is an alkyl or alkenyl group having from 2 to 20 carbon atoms;
R₂ is an alkyl or alkenyl group having from 2 to 20 carbon atoms;
R₃ is an alkylen or alkenylen group having from 2 to 20 carbon atoms; and
R₄ is an alkylen or alkenylen group having from 2 to 20 carbon atoms
or a polyalkylenoxide group having a molecular weight of from 150 to 15,000 Da,
B is an alkylen group containing from 1 to 50, an alkenylen or an alkynylen group containing from 2 to 50 carbon atoms,
D is a group D₁ or D₂, wherein D₁ is an alkylen group containing from 1 to 6 carbon atoms, an alkenylen or an alkynylen group containing from 2 to 6 carbon atoms, wherein said alkylen, alkenylen or alkynylen group is substituted, independently of each other, by a group (F) 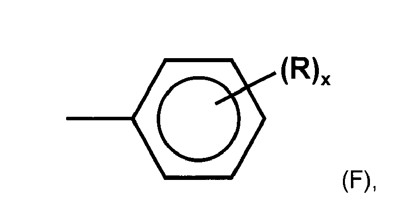 wherein R is a group selected from hydroxy, acetoxy and alkoxy having from 1 to 6 carbon atoms, provided that at least one R is hydroxy,
x is from 1 to 3,
wherein D₂ is a derivative of an α-amino acid, and
wherein the group D is not only selected from group D₂.

2. The polymer according to claim 1, wherein
A is an alkylen, alkenylen or alkynylen group containing from 4 to 40 carbon atoms, or a polyalkylenoxide group having a molecular weight of from 400 to 3,500 Da.

3. The polymer according to claim 1 or 2, wherein
A is an alkylen group containing from 2 to 10 carbon atoms.

4. The polymer according to any of claims 1 to 3, wherein
B is an alkylen, alkenylen or alkynylen group containing from 5 to 12 carbon atoms.

5. The polymer according to any of claims 1 to 4, wherein
B is an alkylen group having from 7 to 9 carbon atoms.

6. The polymer according to any of claims 1 to 5, wherein
D₁ is an alkylen group containing from 1 to 6 carbon atoms, an alkenylen or an alkynylen group containing from 2 to 6 carbon atoms, wherein said alkylen, alkenylen or alkynylen group is substituted, independently of each other, by a group (F), wherein R is a hydroxy group, and x is 2.

7. The polymer according to any of claims 1 to 6, wherein
D₁ is a group

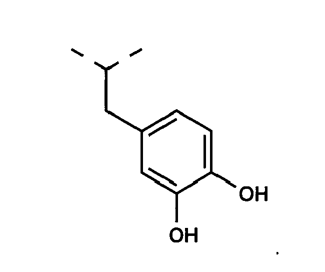

8. The polymer according to any of claims 1 to 7, wherein D₂ is a derivative of an α-amino acid, wherein the α-amino acid is selected from the group consisting of phenylalanine, lysine, histidine, serine, threonine, methionine, glycine, proline, alanine, valine, leucine, isoleucine, tyrosine and tryptophan.

9. The polymer according to any of claims 1 to 8, wherein A is a group 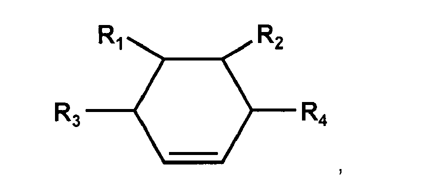
wherein R₁ to R₄ are as defined in claim 1.

10. The polymer according to any of claims 1 to 8, having the formula (II) 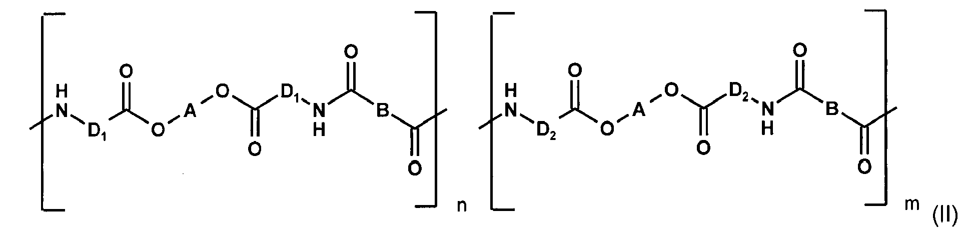
wherein A, B, D₁ and D₂ are as defined in claim 1, and wherein n is from 0.05 to 1 and m is from 0 to 0.95.

11. A process for preparing the polymer according to any of claims 1 to 10, comprising the following reaction: 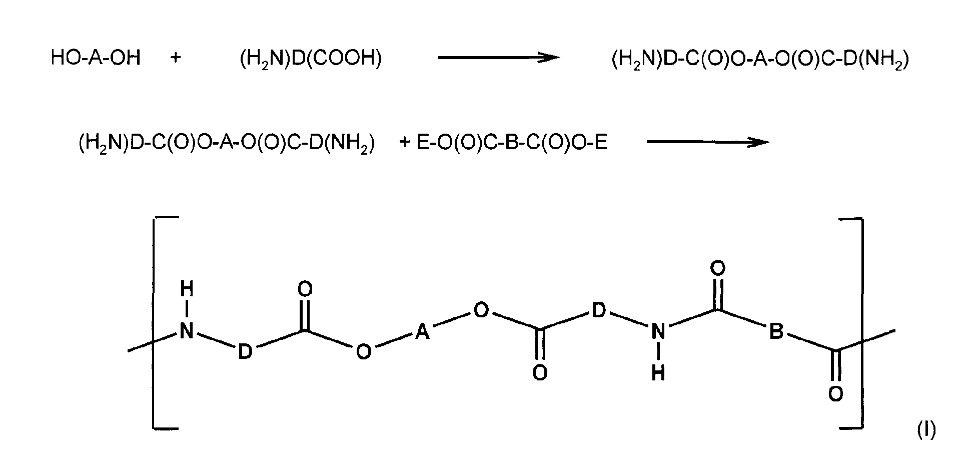 wherein A, B and D are as defined in claim 1 and wherein E is a leaving group.

12. The process according to claim 11 for preparing a compound of formula (II); comprising the following reaction: 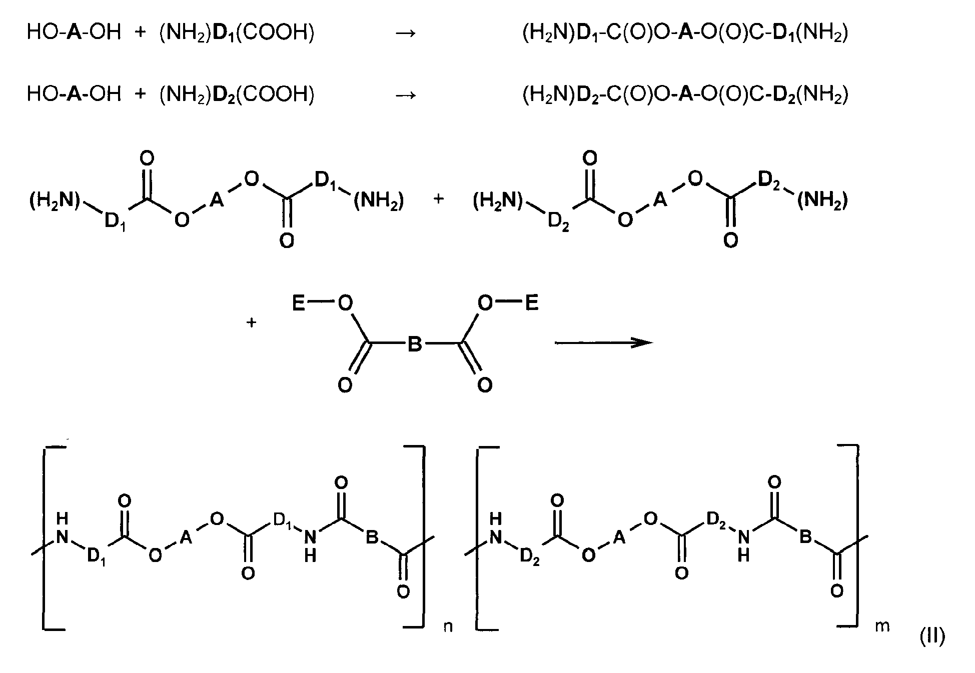 wherein A, B, D₁ and D₂ are as defined in claim 1, wherein n is from 0.05 to 1 and m is from 0 to 0.95, and wherein E is a leaving group.

13. Use of a polymer according to any of claims 1 to 8 as an adhesive.
